# EUROPEAN PATENT APPLICATION

(11) **EP 3 915 401 A1**
(43) Date of publication of application: **01.12.2021**
(21) Application number: 20176831.4
(22) Date of filing: 27.05.2020
(51) Int. Cl.: A23N 12/08, A23N 12/12

(54) **COFFEE BEANS ROASTING APPARATUS**

(71) Applicant: Société des Produits Nestlé S.A., 1800 Vevey (CH)
(72) Inventor: DUBIEF, Flavien Florent, 1424 Champagne (CH)
(74) Representative: Ducreux, Marie

(57) **Abstract**

The invention concerns an apparatus (10) for roasting coffee beans comprising a frame (7), said frame supporting :
- a roasting chamber (1) presenting a top opening (12), and
- at least one storing container (20) for beans to be roasted, and
- at least one dosing device (21) to dose beans from said at least one storing container (21), said dosing device comprising a beans dispensing outlet (211) configured to dispense at least one dose of non-roasted coffee beans to the top opening of the roasting chamber,
wherein the frame (7) supports the at least one dosing device (21) so that the heat generated inside the roasting chamber is not conducted to the dosing device (21).

## Description

### Field of the invention

The present invention relates to a coffee beans roasting apparatus.

### Background of the invention

Roasting of coffee beans at small scale that is at home or in shops and cafes is usually implemented with small sized apparatuses wherein green coffee beans are dosed and introduced manually by the operator.

WO 2012059484, WO 2018105163, WO2018185453 describe a small roasting apparatus comprising a dosing chamber for receiving the pre-dosed quantity of beans to be roasted and holding the beans while waiting the roasting chamber is ready for operation.

In an aim to provide more automatic roasting operations, it is desired to integrate inside the roasting apparatus one or several containers of non-roasted beans and one or more devices configured to dose specific quantities of beans from said containers and to introduce them in the roasting chamber. In particular a doser comprising a dosing auger is particularly adapted to the dosing of coffee beans, taking beans from the storing container and delivering them to the roasting chamber.

Yet is has been observed that the rotation of the dosing auger in such hot roasting apparatuses is not always reliable due probably to thermal dilatation of the internal mechanical pieces of the dosing device. In particular rotation issues vary with the time of operation of the apparatus, probably due to the progressive heating of the internal parts of the roasting apparatus after several roasting operations which impacts directly the accuracy of the dosing and then the subsequent roasting since different quantities of beans are roasted within the same conditions. It can even happen that the rotation of the dosing auger is totally prevented and no dosing and roasting operation is possible.

An object of the present invention is to provide a roasting apparatus providing more reliable dosing of beans whatever the time of operation of the apparatus.

### Summary of the invention

In a first aspect of the invention, there is provided an apparatus for roasting coffee beans comprising a frame, said frame supporting :
- a roasting chamber presenting a top opening, and
- at least one storing container for beans to be roasted, and
- at least one dosing device to dose beans from said at least one storing container, said dosing device comprising a beans dispensing outlet configured to dispense at least one dose of non-roasted coffee beans to the top opening of the roasting chamber,
   wherein the frame supports the at least one dosing device so that the heat generated inside the roasting chamber is not conducted to the dosing device.

In the roasting chamber of the apparatus, coffee beans are heated and preferably mixed to homogenise heating through the beans.
The source of heating can be a burner (meaning combustion) fed by natural gas, liquefied petroleum gas (LPG) or even wood. Alternatively the heat source can be an electrical resistor, a ceramic heater, a halogen source, a source of infrared or of microwaves. Preferably the source of heating is electrically powered.
The mixing of the beans during the roasting operation can be obtained with a fluidic bed of hot air and/or mechanically with stirring blades.
Preferably the roasting apparatus is hot air fluid bed chamber. Within such a chamber, heated air is forced through a screen or a perforated plate under the coffee beans with sufficient force to lift the beans. Heat is transferred to the beans as they tumble and circulate within this fluidized bed.
The roasting chamber comprises a top opening. This top opening is particularly used to introduce coffee beans to be roasted inside the chamber.

The apparatus comprises one or more containers for storing beans to be roasted. When several containers are present, they can contain different types of beans. The beans to roasted can be green coffee beans or partially roasted beans.

The apparatus comprises one or more dosing devices to dose beans stored in the one or more storing containers. The dosing device can be any of type comprising a metering cavity displaceable between a dosing position and a dispensing position. The dosing device can be a rotatable auger, a sliding drawer, a rotatable disc, an endless screw. The doser can be operated manually or automatically by a motor.
Preferably, the dosing device is connected to the storing container. If several containers are present, then preferably, each container cooperates with one dedicated dosing device.
The dosing device comprises a beans dispensing outlet configured to dispense at least one dose of non-roasted coffee beans to the top opening of the roasting chamber. Accordingly, the dosing device is positioned at a vertical level above the roasting chamber.

The frame of the apparatus supports the roasting chamber and the dosing device so that the heat generated inside the roasting chamber is not conducted to the dosing device.
As a result, the dosing device is not heated at important temperatures that can affect its operation and its accuracy.

Preferably, the frame supports the at least one dosing device and the roasting chamber so that the parts of the dosing device is distanced from the parts of the roasting chamber. In particular no surface of the dosing device contacts any surface of the heating chamber.

In addition, it is preferable that any device directly in contact with the dosing device is distanced from the parts of the heating chamber. In particular, when the storing container is directly in contact with the dosing device, for example when the storing container is connected to and lays on the dosing device, then said container is not contact with the hot parts of the roasting chamber.

In one preferred embodiment, the beans dispensing outlet of the at least one dosing device is positioned above the top opening of the roasting chamber and the frame supports the at least one dosing device in order to establish a gap with the top of the roasting chamber. Consequently the frame supports the dosing device and the roasting chamber so that they are positioned away one form the other and that an empty space is defined between them avoiding heat conductive between them.
Usually a gap (g) of at least 2 mm is sufficient.

In one preferred embodiment, the beans dispensing outlet of the at least one dosing device is offset from the top opening of the roasting chamber and the apparatus comprises a chute to guide beans from the beans dispensing outlet to the top opening of the roasting chamber, and the chute is attached either to the doser only or to the top of the chamber only.
Accordingly, the dosing device is offset from the top opening of the chamber and there is less risk that hot air elevating from the top opening during roasting operation heats the dosing device. The the chute facilitates the movement of beans from the offset dosing device to the chamber, yet since it is not attached to both of them, the heat of the chamber is not conducted to the dosing device.

In one preferred embodiment, the at least one dosing device is attached to the frame by an arm. As a result the direct contact of the dosing device with the frame is limited even if the frame is heated by contact with hot elements like the roasting chamber.

In one embodiment, the top of the chamber is distanced from the bottom opening of the dosing device by a connector, said connector presenting a low thermal conductivity. The insulation property can be provided by the nature of the material the connector is made of (insulated material enabling only a small amount of heat to reach the dosing device by conductive) and/or by the design of the connector. For example, the connector can be designed with holes and fins in order to maximize dissipation of heat to ambient air and reduce heat transfer to the doser .

In one embodiment, the roasting apparatus comprises an air driver configured to blow ambient air to the area between the top opening of the roasting chamber and the doser and/or to the doser.
This ambient air limits the increase of temperature in this area by driving hot air flowing out of the top opening of the roasting chamber away from the doser.

Preferably, at least a part of the frame is made of a material presenting a low thermal conductivity. As a result, this part prevents heat conductive through the frame. Preferably, at least the part of the frame supporting and in contact with the roasting chamber is made of such a material.

In one embodiment, at least a part of the frame can present a shape that designs fins in order to act as a heat exchanger and dissipate heat to ambient air

The roasting apparatus can comprise an air driver configured to blow ambient air through at least a part of the frame in order to evacuate heat. Preferably, air is blown to the hottest part(s) of the frame. If a part of the frame presents a shape that designs fins, then preferably ambient air is blown to that part.

In the present application the terms "non-roasted beans" apply to green beans or partially roasted beans that is beans having been obtained by heating green coffee beans and stopping said heating process before the end of the first crack.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

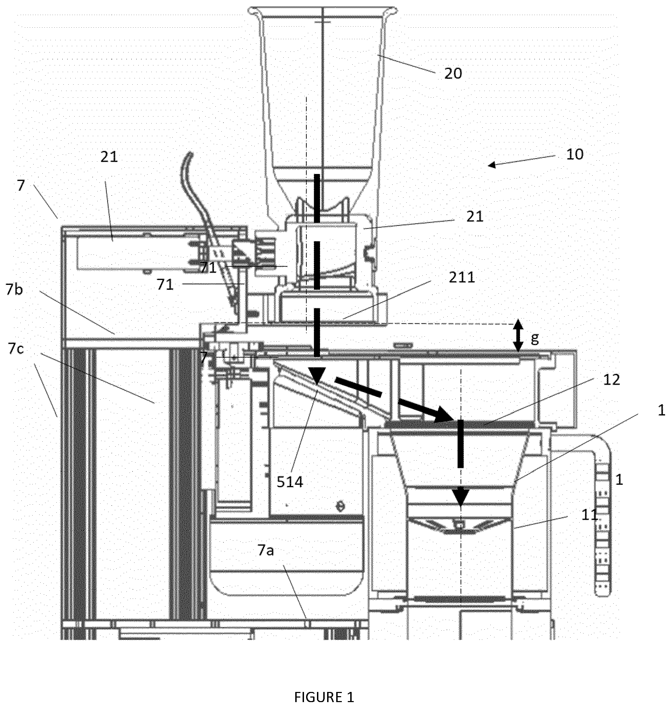

Specific embodiments of the invention are now described further, by way of example, with reference to the following drawings in which Figure 1 is a vertical cross section of a roasting apparatus according to the invention.

### Detailed description of exemplary embodiments

**Figure 1** shows a vertical cross section of a roasting apparatus according to the invention. Functionally, the roasting apparatus 10 is operable to roast coffee beans hold in a chamber 1 by means of a flow of hot air introduced upwardly through the bottom of the chamber. This flow of hot air is generated by an air flow driver and a heater positioned below the chamber (and not represented).

The chamber 1 is configured to receive and hold the coffee beans introduced through its top opening 12. The bottom opening 11 of the chamber is configured to enable air to pass through, specifically it can comprise a perforated plate on which the beans can lie and through which air can flow upwardly. This perforated blade can comprise perforation designed to provide the air flow with a specific flow pattern inside the chamber. The chamber 1 comprises a handle in order to enable the user to remove the chamber from the housing and hold it outside the housing.

A chaff collector (not represented) is in flow communication with the chamber 1 to receive chaffs that progressively separate from the beans and due to their light density are blown off to the chaff collector.

The apparatus comprises a container 20 to hold non-roasted coffee beans and a dosing device 21 cooperating with the bottom of the container to dose and dispense the dose of non-roasted beans to the top opening 12 of the chamber as illustrated by the dotted arrows. The dosing device 21 is barrel comprising at least one metering cavity and rotated by a motor 212 by teeth engagement between shafts. Other types of dosing devices can be used.
From the dispensing outlet 211 of the dosing device beans fall by gravity in a chute 514 oriented in direction of the top opening 12 of the chamber. The chute is attached to the top of the chamber.

The different elements of the roasting apparatus are supported by a frame 7 :
- the roasting chamber 1 is supported by a first horizontal plate 7a of the frame,
- the dosing device 21 is hold by an arm 71 extending from a second horizontal plate 7b of the frame,
- the first and second plates 7a, 7c are attached to two vertical pillars 7c.

The arm 71 is designed to hold the dosing device 21 so that said device does not touch the chamber and the devices attached to the chamber like the chute 514 as illustrated by the gap g. Accordingly, the heat generated inside the roasting chamber 1 is not conducted to the dosing device 21 with the result that the mechanical parts of the dosing device are not dilated avoiding the risk of mis-dosing or blockage while temperature increases roasting after roasting.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

### List of references in the drawings :

| | |
|---|---|
| roasting chamber | 1 |
| bottom openings | 11 |
| storing container | 20 |
| dosing device | 21 |
| outlet | 211 |
| motor | 212 |
| chute | 514 |
| frame | 7, 7a, 7b, 7c |
| arm | 71 |

## Claims

1. Apparatus (10) for roasting coffee beans comprising a frame (7), said frame supporting :
- a roasting chamber (1) presenting a top opening (12), and
- at least one storing container (20) for beans to be roasted, and
- at least one dosing device (21) to dose beans from said at least one storing container (21), said dosing device comprising a beans dispensing outlet (211) configured to dispense at least one dose of non-roasted coffee beans to the top opening of the roasting chamber, wherein the frame (7) supports the at least one dosing device (21) so that the heat generated inside the roasting chamber is not conducted to the dosing device (21).

2. Apparatus according to Claim 1 wherein the frame (7) supports the at least one dosing device (21) and the roasting chamber (1) so that the parts of the dosing device are distanced from the parts of the roasting chamber.

3. Apparatus according to Claim 1 or 2 wherein any device directly in contact with the doser is distanced from the heating chamber.

4. Apparatus according to any one of the precedent claims wherein the beans dispensing outlet (211) of the at least one dosing device (21) is positioned above the top opening (12) of the roasting chamber and the frame supports the at least one dosing device (21) in order to establish a gap with the top of the roasting chamber.

5. Apparatus according to the precedent claim, wherein the beans dispensing outlet (211) of the at least one dosing device (21) is offset from the top opening (12) of the roasting chamber and the apparatus comprises a chute (514) to guide beans from the beans dispensing outlet (211) to the top opening (12) of the roasting chamber, and the chute is attached either to the doser only or to the top of the chamber only.

6. Apparatus according to the precedent claim, wherein the at least one dosing device (21) is attached to the frame (7) by an arm (71).

7. Apparatus according to Claim 1, wherein the top of the chamber is distanced from the bottom opening of the dosing device by a connector, said connector presenting a low thermal conductivity.

8. Apparatus according to any one of the precedent claims, wherein said roasting apparatus comprises an air driver configured to blow ambient air to the area between the top opening of the roasting chamber and the doser and/or to the doser.

9. Apparatus according to any one of the precedent claims, wherein at least a part of the frame (7) is made of material presenting a low thermal conductivity

10. Apparatus according to any one of the precedent claims, wherein at least a part of the frame (7) presents a shape that designs fins in order to act as a heat exchanger and dissipate heat to ambient air.

11. Apparatus according to any one of the precedent claims, wherein said roasting apparatus comprises an air driver configured to blow ambient air through at least a part of the frame in order to evacuate heat.
